# EUROPEAN PATENT APPLICATION

(11) **EP 1 975 829 A1**
(43) Date of publication of application: **01.10.2008**
(21) Application number: 07251314.6
(22) Date of filing: 28.03.2007
(51) Int. Cl.: G06F 21/00, H04L 29/06, H04L 12/26

(54) **Identifying abnormal network traffic conditions**

(71) Applicant: British Telecommunications public limited company, 81 Newgate Street London EC1A 7AJ (GB)
(72) Inventor: The designation of the inventor has not yet been filed
(74) Representative: Sayer, Robert David

(57) **Abstract**

A method of identifying an abnormal network condition, including the steps of
- monitoring a communications link for a high traffic volume,
- identifying a sender responsible for the high traffic volume level, and
- invoking a conventional TCP response from the sender

wherein a failure by the sender to provide a conventional TCP' response is taken as an indication of an abnormal network condition.

## Description

The present invention relates to methods, apparatus and installations related to the detection of senders of high volumes of traffic over a communications link or network. It is concerned particularly, but not exclusively, to denial of service (DoS) attacks by way of flooding the network (or part thereof) with traffic directed to one or more target or victim receivers.

DoS attacks can be characterised chiefly by the intention of the attacker to disrupt the operation of the victim, by starving it of computer resources or preventing other legitimate users from reaching the victim's servers by depleting its resources (such as bandwidth, CPU cycles, memory).. DoS attacks have an enormous adverse impact on businesses, estimated in 2005 by the Computer Security Institute to be second only to that inflicted by viruses and worms.

Many DoS attack modes exploit characteristics and limitations in the Transport Control Protocol/Internet Protocol (TCP/IP), currently one of the more commonly-used transport protocols for traffic delivered over communication networks. Popular services and applications such as mail (SMTP, port 25), file transport protocol (FTP), and Hyper Text Transfer Protocol (HTTP), are all based on the TCP protocol. Unlike the other major delivery transport protocol, User Datagram Protocol (UDP), TCP is a connection-oriented protocol which enables two hosts to establish a connection to exchange in-sequence data in a reliable manner. This reliability stems in part from the receiver's acknowledging the receipt of packets received in the correct sequence number order, usually by way of an acknowledgment (ACK) packet or message. Furthermore, if an expected packet is not received at the receiver or far end within a reasonable round-trip time, a timer will cause a timeout wherein the expected packet is deemed to be missing. Whenever an expected packet is not received, this will be transmitted by the sending end.

One DoS attack mode is to flood the receiver with so much traffic that all its resources are consumed in dealing with the maliciously-sent traffic, that there is none left for the receiver's own legitimate functions, causing the receiver's system to operate at a reduced speed or worse, to hang or crash. Many variations of flooding attack techniques are known, including SYN floods, ICMP floods, UDP floods and the like, each of which have their own characteristics, but in all cases they involve sending a large amount of data typically at a high speed to the victim.

One example of a weakness in the TCP protocol which attackers take advantage of is a SYN flood. Here, a number of connection requests are sent to the victim's computer. The victim's response granting the request is then ignored, leaving the victim with dead connections reserved for clients who will never respond. This occupies much or all of the victim's resources, preventing legitimate users from connecting to the victim.

Attacks can be performed either by a single malicious sender, or can be the concerted action of a number of machines. In the latter case, the concerted action can be controlled by a single, master machine which controls the action of a network "zombies" being computers including a daemon which the master machine uses to launch a flooding DoS attack, or "bots" being computer programs which can be set to automatically launch a flooding attack. In such cases, the identity of the sender and/or master computer is also concealed. In yet another variation, the attacker uses the victim's address and sends out spoof messages, so that replies to the spoof message will flood the victim's machines.

It is also possible for receivers to launch DoS attacks, where vulnerabilities in the TCP protocol allow a receiver machine to control the sending machine's transmission rate. This is discussed in Stefan Savage, Neal Cardwell, David Wetherall, and Tom Anderson, "TCP Congestion Control with a misbehaving receiver", Computer Communication Review, 29(5), 1999, where a proposed solution is to prevent the misbehaving receiver from being able to increase data transmission rates, thus exhausting the sender's bandwidth. This is carried out by delaying the transmission of traffic and monitoring the receiver's behaviour. The present invention is however directed to a different problem, those caused by a sending attacker's flooding activity.

Upon experiencing the effects a DoS attack (e.g. slowing down of services, hanging or crashing), the victim will typically inform its Internet service provider (ISP). Alternatively, a DoS attack can be identified using anomaly- and/or signature-detection techniques which are briefly discussed below. The ISP will then identify the domain from which the attacking packets are originating, and inform the ISP of that domain (the "attacker's domain" or "sender's domain") of the problem and the identity of the victim. The ISP of the attacker's domain will investigate, and block traffic that is addressed and being transmitted to the victim from within the attacker's domain.

Techniques to mitigate the effects of a DoS attack have been proposed. For example in US 2006/0161980, it is assumed that attacking packets will not have valid packet header parameters, and that this can be checked by finding matches in the TCP stack at the receiver host. However, it is well known that attackers can use "legitimate" traffic to launch DoS flooding attacks, e.g. by maliciously resending the one legitimate packet a number of times.

US 2006/0107310 describes an approach wherein the sender is required to authenticate itself before it receives any service. If the using a "spoof" IP address, a nonce sent by the receiver to the sender for the authentication purpose will not be received, so the sender will not be verified nor his messages accepted.

Other techniques for recognising or identifying a DoS traffic flood include anomaly detection and signature detection. In anomaly detection, as described in Gaia Maselli, Luca Deri, and Stefano Suin, "Design and Implementation of an Anomaly Detection System: an Empirical Approach", profiles of all allowed application behaviour and traffic patterns are compared with the current high-volume traffic. A deviation from the "allowed" profile can be indicative of a flooding attack.

In signature detection, a database of attack characteristics observed in the past incidents is created. All incoming packets are compared against the signature data contained this database, and those that match are deemed to be DoS attack packets, and are blocked. This is described in Jelena Mirkovic, Sven Dirtrich, David Dittrich, 2004, "Internet Denial Of Service: Attack and Defense Mechanisms", Prentice Hall PTR.

Identification of when and which high traffic volumes constitute a DoS attack is however seldom accurate, as much depends on the choice and implementation of parameters and the threshold value to generate the base values (anomaly profiles, attack signatures) against which the current traffic is compared.

Moreover, high traffic levels are not in all cases indicative of a DoS flooding attack. A website may, for whatever reason, become suddenly very popular for legitimate reasons in a short space of time. For example, a previously-little visited site might have been "discovered" and a link to it provided on a popular portal. Or a voting site for a popular television programme may be activated - which would cause a spike in traffic levels to that website.

Also, by blocking all traffic bound for the victim from within the sender's domain, legitimate users communicating (or attempting to communicate) with the victim are also blocked off. Such users include parties whose computers are infected with bots and/or zombies which are responsible for the DoS flooding attack. The ISP will block all traffic originating from the infected machine, even if the user is legitimately connected to the victim's website, or even another website.

There is therefore a need to accurately verify whether a high volume of traffic is indeed a DoS flooding attack, due to the draconian response wherein all traffic bound for a victim site is blocked. The solution should also work to identify or confirm senders using legitimate packets with malicious intent, as well as where senders use "spoof IP address".

According to a first aspect of the invention, there is provided a method of identifying an abnormal network condition, including the steps of
- monitoring a communications link for a high traffic volume,
- identifying a sender responsible for the high traffic volume level, and
- invoking a conventional TCP response from the sender
wherein a failure by the sender to provide a conventional TCP response is taken as an indication of an abnormal network condition:

Here, a challenge or a test is set for the sender who is transmitting a high volume of traffic, typically in a DoS attack where the volume of traffic is sent at a high transmission rate. The method of the invention is useful also for diagnostic purposes to identify problematic or faulty parts of the communications link or network (which could be a single node or a greater part of the network). The test comprises e.g. a request to retransmit a particular packet, either by sending the sender a NACK message (as described below), or by hijacking an ACK message from the receiver. Essentially, the test creates a situation or conditions which are routine and unremarkable to TCP transmissions, to which the sender's response is monitored, so the sender's suspicions will not be aroused upon encountering the test. No significant modification to existing client systems operating according to the TCP standard is required for the operation of the invention. If the sender fails to provide a conventional TCP response, its traffic is in a preferred embodiment blocked from further transmission. To improve the chances of receiving the response from the sender, if any, the invention is preferably carried out near the sender so that the shorter path will mitigate against transmission problems (e.g. caused by congestion caused by a DoS flood attack).

The method of the invention can be used in a variety of contexts. It could serve to detect possible flooding traffic in the first instance. Alternatively, it could be used to confirm that traffic already suspected to be part of a DoS attack is indeed malicious in nature, where the sender and/or traffic has already been identified by an ISP operator, or else by anomaly- and/or attack-signature detection methods (as discussed in more detail below).

According to a second aspect of the invention, there is provided apparatus for carrying out the above method.

According to a third aspect of the invention, there is provided an installation comprising a telecommunications network, further including apparatus according to any one of the claims as claimed below.

According to a further aspect of the invention, there is provided a method of operating apparatus according to any one of claims as claimed below.

Embodiments of the invention will now be described by way of example only with reference to the accompanying drawings in which:
Figure 1 depicts a network arrangement according to a first embodiment of the invention and an associated sequence diagram;
Figure 2 depicts a network arrangement according to a second embodiment of the invention and an associated sequence diagram; and
Figure 3 depicts a network arrangement including four different senders located within the domain of a computer transmitting a high level of traffic indicative of a problem, and an associated sequence diagram.

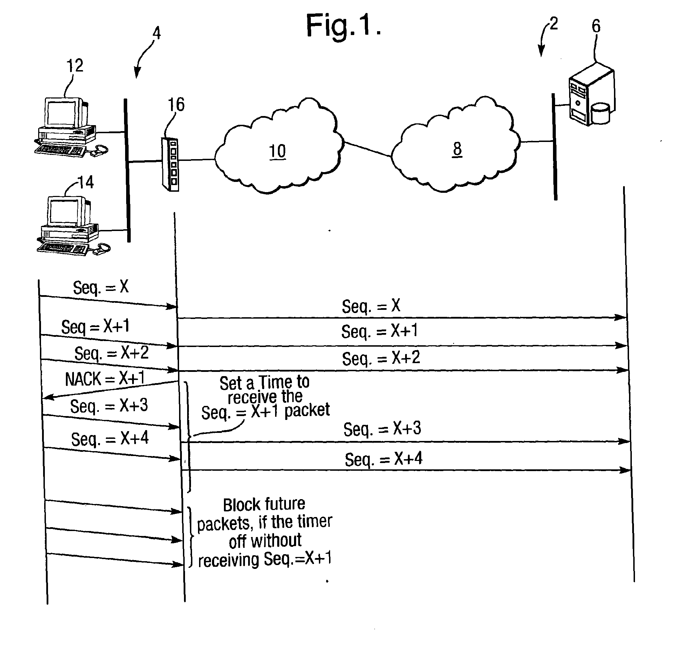

Figure 1 represents the components making up a conventional Internet-based system comprising a number of domains, although the invention can work equally well within a single domain, intranet or extranet, within which the sender and the victim are both located. On the receiver side (2) is a receiving node (6) (herein also called "receiver", "receiving computer", "victim", "target" or the like) located within a first, receiver's domain (8) (sometimes referred to herein as the "victim's domain"). This is connected via a network like the Internet to a second, attacker's or sender's domain (10) on the sender side (4), within which senders (12) and (14) are located.

In a typical DoS attack, a sender (e.g. 14) (herein also the "attacker", as the context permits) sends to the targeted receiver (6) a large number of messages comprising e.g. connection requests, through the two domains forming the network interconnecting them. The traffic is sent with the malicious intention of depriving the receiver of computer resources, or else to congest the communications path to the receiver so as to impede third party access to the receiver's servers.

While much of the description herein will refer to "attacks" by senders as consisting of a DoS attack wherein the sender acts with malicious intent to cripple the intended receiver's system by flooding it, the disruptive effects of flooding are felt even where there is no malicious intent on the part of the sender, for example if the sender's equipment or software is faulty, or where in any event the sender unintentionally sends a large volume of useless data to an addressed receiver. The present description of the invention is directed to the effects of a flooding of a network as an objective effect, regardless of the subjective intent behind the flooding, although for convenience the invention shall herein be described in terms of a "malicious" sender sending "malicious" traffic to "attack" a "victim".

In the invention, the network of Figure 1 includes a detection apparatus or system (16) which preferably located at the sender end (2) within the sender's domain (10), for reasons which will be discussed below. As traffic is generated by the senders, the sender's domain (10) is configured so that traffic passes through the detection system(s). There is at least one detection system per domain, and preferably there are should be a detection system for a pre-determined number of sender hosts (e.g. one detection system for every 1,000 hosts, or one per subnetwork in the domain), depending on traffic levels, link speeds, and so on.

The primary function of the detection system is to identify malicious senders and malicious traffic. This it does by testing sender(s) who are sending traffic to the victim from within the attacker's domain. The test can be applied to all senders served by the detection system, or more productively, only on those senders who are generating and sending a high volume of traffic though the domain on the sender side. In a preferred embodiment, this test can be conducted on a sender who has already been initially identified as possible attacker, by an alert from the ISP of the receiver's domain, or through initial identification using the anomaly- or signature-detection method discussed above. The detection system can be activated manually by the ISP, or automatically upon the satisfaction of pre-determined conditions e.g. when internal traffic volumes within the sender's domain unexpectedly spike above a certain threshold, prompting an investigation to discover its cause.

The test applied by the detection system comprises sending a conventional message according to e.g. the TCP protocol to the sender. According to the protocol, the sender should respond in a particular way. If the sender fails to provide the normal or conventional TCP response, the tested traffic sent by that party is deemed to be problematic e.g. it is part of a DoS flooding attack.

Essentially, a sender launches a flood attack by sending a high volume of packets with a high transmission rate, and ignores the sender's request to lower their traffic transmission rate. Genuine senders wish for the payload in the data packets they send to be received by the receiver in correct sequence, and TCP software and programs will comply with TCP/IP stack implementation, to ensure compliance with TCP RFC standards. Malicious flooding attackers on the other hand, are not concerned with the content of the messages they send, nor the order in which they arrive; indeed a typical flooding attack method consists of resending the same one packet with the same one serial number, or packets having random or arbitrary numbers. Unlike in e.g. a virus attack, all that is needed to successfully flood-attack a victim is for a sufficient number of packets to reach the victim at speed to starve it of resources: the content of the packets is completely irrelevant. Thus it is not the attacker's concern that the payload in the packets correctly reaches the receiver. To ignore TCP requests for retransmission, the packets making up the flood traffic are deliberately reconfigured, or not fully implemented, to avoid compliance with TCP protocol requirements, at least in this respect. Bots, being very simple and specialised small programs, are particularly suited for the purpose of transmitting such flooding packets which full TCP stack is not fully implemented, or else implemented so that the congestion control process controlling the flooding behaviour of TCP can be ignored. Alternatively the sender can use a machine which operating system has been reprogrammed or altered - open source systems for example, allow for full reconfiguration and can be misused by attackers. Even non-open source operating systems could be imaginatively reprogrammed for this purpose.

As noted above however, the failure to respond according to the TCP protocol need not invariably mean that the sender is a DoS attacker with malicious intent. It is possible that the sender's machine is malfunctioning or the part of the network the sender is faulty, so that the test message does not reach the sender (although it is still able to send traffic out). In such cases where a DoS attack is not intended by the sender, the invention allows the diagnosis of such abnormal conditions in the network - which could be anything from a single faulty machine (or part thereof), to a network-wide problem - for any necessary remedial action. Meanwhile, the high volumes of traffic put out by the faulty sender can nonetheless be blocked to ameliorate the objective effects of congestion over the network or a particular communications link and resource deprivation at the receiver side.

Once the guilty party (or parties) is identified, traffic directed to the victim originating from it - and only it - is blocked. Thus the activities of other genuine users located in the sender's domain are not disrupted, even if they are at the time communicating, or attempting to communicate, with the victim. The invention allows for very accurate identification of malicious senders and malicious traffic, such that even when genuine and attacking traffic is transmitted from the same physical machine (e.g. where a user's computer is infected with a bot), only the attacking traffic can be identified and blocked.

The task of blocking traffic can be carried out by a router or a computer as is conventional, or it can be performed by the detection system. Essentially, a timer is started to set a period, and traffic received from the sender identified to be an attacker is simply dropped for the set period by not forwarding it to the next router along. Alternatively, the router or detection system can send a filtering message to the router nearest to the attacking sender, with the instruction for that router to drop traffic for the set period. The filtering message includes the sender IP address, the destination IP address, protocol (TCP) and amount of time to block his traffic. This allows for very specific targeting of malicious traffic: if the sender sending the malicious traffic is communicating with a receiver other than the victim, that traffic is not blocked or dropped, as the detection system has not found the traffic sent to the other receiver to be malicious.

The detection system is, in a preferred embodiment, located at the sender's end (4) within the sender's domain (10). This is so that the effect of further attacking traffic, after identification by the detection system can be confined within the attacker's domain. Also, there is a greater chance that the challenge or test message sent by the detection system to the sender will reach the sender than if the test message was sent from a more remote location due to the usual reasons such as congestion on the link (due perhaps to the presence of flooding traffic on the link or in the network), or firewalls or domain borders preventing passage of the messages. The skilled person would however appreciate that the detection system can nonetheless be placed at any point between the suspected attacker and the victim, as long as the challenge or test packets can be sent to the sender and its behaviour and response (or lack thereof) monitored.

Two examples of how traffic can be tested by the detection system will now be described. In the first, the detection system sends a negative acknowledgement (NACK) message to the sender, and in the second, packets originating from the sender, or ACK messages from the receiver are intercepted so that their delivery is withheld or delayed. In both cases, the conventional TCP response should be to retransmit the packet(s) and drop his transmitting rate complying with the congestion control of TCP.

### First embodiment: NACK messages

According to TCP protocol, a receiver knows, from the sequence numbers of packets it receives, what it should be receiving next. If an expected packet fails to arrive, the receiver can send to the sender a NACK message to request retransmission of a missing packet. Conventionally, the sender will understand the NACK message to be an indication of network congestion and that the expected packet is probably lost. The transmission window size is dropped to reduce congestion, and the missing packet retransmitted.

In the invention, the detection system (16) tests if a suspicious sender is an attacker or not, by invoking a response from the sender. This procedure or sequence is typically implemented when there is already an initial suspicion that the particular sender may be an attacker - e.g. from an alert received from the ISP of the victim's domain. The sequence diagram of Figure 1 shows an exchange between the detection system and the sender (e.g. 14) wherein the sender is sent a NACK message in which the detection system requests the sender to retransmit a particular packet and drop his transmitting rate. If the sender is genuine and has the legitimate desire to have that packet correctly delivered, it will retransmit the packet and reduce its congestion window size, which is the conventional and expected TCP response. If the sender does not care about delivery of the packet, only that a large volume of data should reach the victim with devastating effect, it will ignore the NACK messages and continuing transmitting the flood traffic at the same rate. The failure by the sender to respond according to TCP protocol is noted by the detection system, which is deemed to be confirmation that the sender who is in communication with the victim, is an attacker.

Each NACK packet need to look as if it came from the intended receiver, as otherwise the normal behaviour of TCP is just to drop each packet and the challenge session will fail. Thus the detection system should generate the test NACK messages with the right source IP address = receiver (6)'s address, destination address = local client (14) address, source and destination port = similar to original packets traversing between the sender and receiver. The ACK number should be the requested packet to be transmitted: this can be any number observed from previous packets as the NACK serves merely to just to challenge the client to resend that packet with the same ACK header number; the rest of the packet header is irrelevant for present purposes. When the sender receives the request of transmitting the packet, it should retransmit that packet and drop its transmitting rate by dropping the TCP congestion window size according to the TCP protocol.

In the sequence diagram, the sender (14) sends, in succession, packets X, X+1 and X+2 addressed to the receiver (6). These packets reach the detection system (16) which lets them pass through to the receiver machine. Before the next packet is allowed through, the detection system sends a NACK message to the sender. A time is set for the sender to provide the normal TCP response which is to retransmit the packet X+1 identified in the NACK message. The sender ignores the NACK request to retransmit, and instead continues sending the victim packets X+3 and X+4 which the detection system lets through. However upon expiry of the time allowed for the sender to respond by retransmitting packet X+1 required in the NACK message, the detection system determines that the sender is not sending traffic for a legitimate purpose, and blocks further transmissions by the sender.

### Second embodiment: Withholding or delaying delivery

In a second example of a test or challenge message of the invention, the detection system withholds or delays delivery of the traffic sent by the suspected attacker. TCP protocol includes a timeout and retransmission mechanisms. TCP expects the destination to send an acknowledgment (ACK) message back to the sender whenever it successfully receives new segments or packets. Conventionally, a TCP timer is set every time a message is sent, and the ACK message is expected to be received by the sender before expiry of the set time period. If the set time expires without receipt of the ACK, it is assumed that the segment was lost or corrupted, and the sender retransmit the same (presumed missing) packet. It is not necessary however for ACK for each segment to be received before start the next packet is sent; whole segments in the TCP window can be sent before ACK therefor is expected.

According to the invention, the detection system is configured to intercept either the ACK packets sent by the receiver to the sender, or the packets or segments being sent to the receiver. This is to enable the detection system to either completely withhold delivery, or else to introduce a delay sufficient so that the time set by the TCP timer expires before the ACK reaches the sender. As a result, the sender fails to receive an ACK for the packet or segment sent, which should invoke from the sender the conventional or normal TCP response of retransmitting the particular packet or segment and drop its transmission rate to comply with the congestion control mechanism of TCP as is conventional. A sender transmitting genuine traffic will provide the conventional response, as it wants its traffic to get to the receiver correctly. As in the NACK example, a DoS attacker is not concerned about delivery of the payload of his messages, and is therefore expected to ignore the lack of receipt of an ACK packet. Instead, it will continue to send flooding traffic the victim.

The detection system monitoring the sender's behaviour can then positively identify the sender's traffic as being malicious (or symptomatic of a problem), and act to block the traffic. The time the detection system has to wait depends on the bandwidth delay and sender TCP window size.

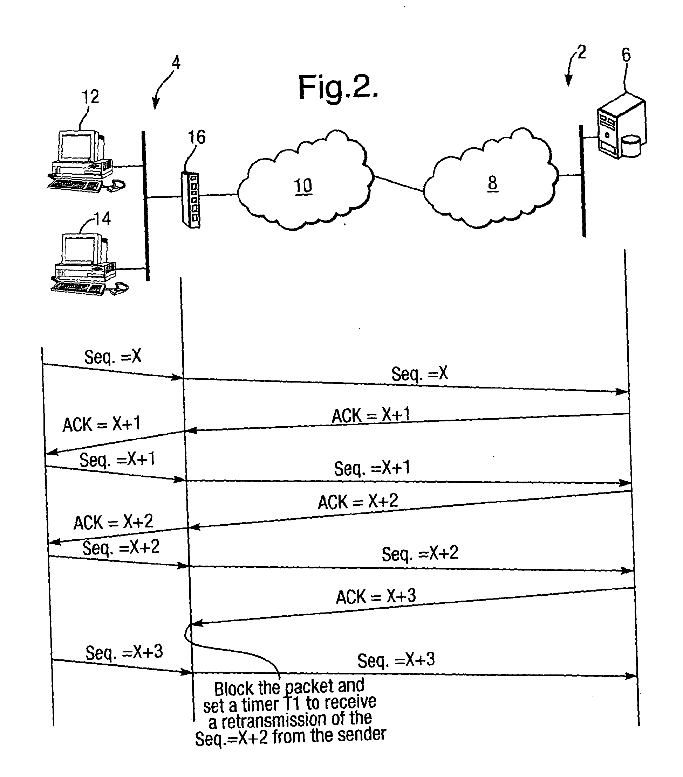

This embodiment of the invention is depicted in Figure 2. As in the NACK embodiment described above, sending machines (12, 14) are located at the sending end (4) in the sender's domain (10). These sender(s) output messages bound for the receiver computer (6) located at the receiver end (2) in the receiver's domain (8), which are delivered through the network comprising the two domains (8, 10) which includes the detection system (16).

As shown in the sequence diagram, the sender (14) sends a packets X which is delivered to the receiver (6) via the network. In response, the receiver returns to the sender acknowledgement packet ACK X+1 which the sender receives. The sequence repeats the sending of packet X+2 which returns the ACK message X+2. The sender sends its third message X+2 which again reaches its destination which, in compliance with TCP rules, sends ACK X+3. This time the detection system is activated to test the sender to in respect of its traffic directed to the receiver (6). ACK X+3 is blocked for time period T1 invoke the conventional TCP response from the sender to retransmit packet X+2 and drop its transmitting rate. In the example shown in Figure 2, the sender fails to provide the correct response, and instead transmits packet X+3 instead of X+2 and keep sending traffic at the same rate. This is an indication to the detection system that the tested traffic is either sent maliciously as flooding traffic, or else that there is a problem or fault within the network at the sender's end so that the sender is unable to respond according to TCP protocol. The sender's traffic will then be blocked by the detection system or other blocking means for a pre-determined period.

### Example: Multiple senders and receivers

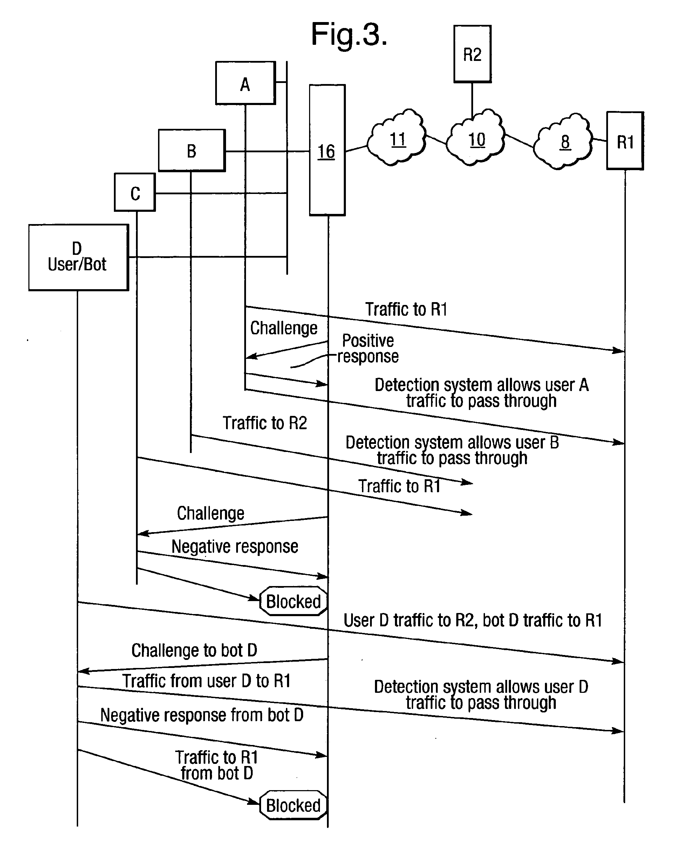

A further example illustrating the operation of the inventive method and apparatus will now be discussed using the depiction in Figure 3 of a network comprising three domains (8, 10, 11), two receivers R1 and R2, and four senders A, B, C and D. A detection system (16) of the invention is located in the network in the sender's domain (11). Sender A is a genuine user who is seeking to communicate with receiver R1. Sender B is a genuine user who is seeking to communicate with receiver R2. Sender C is a malicious attacker wishing to launch a DoS attack on receiver R1. In the case of sender D, the computer is used by user D for a genuine purpose to communicate with receiver R2, but is also infected with a bot D which is sending flooding packets to receiver R1.

The operation of the invention in each sender's case will now be discussed in turn, with reference to the sequence diagram of Figure 3. The assumption here is that DoS attacking traffic has been reported by the ISP in receiver R1's domain (8) to the ISP in the senders' domain (11).

Sender A sends traffic to R1 which reaches R1 via the networks (11, 10 and 8). When the detection system (16) sends a test or challenge message to A (e.g. by sending a NACK message or delaying/blocking the ACK packets from the receiver), A provides the expected and convention TCP response. This satisfies the detection system that A is sending its traffic to R1 for a legitimate purpose, and allows A's traffic to R1 to pass through. The detection system can preferably be configured to test A's traffic after pre-determined intervals to ensure the continued integrity of the A's traffic and intentions.

Sender B is connected to and exchanging data with receiver R2. As no alert has been raised about a DoS attack on R2, B's traffic is not checked by the detection system.

Sender C is a malicious attacker and sending a flood to receiver R1. Here, the detection system issues a test or challenge which invokes a conventional TCP response. The traffic of sender C is configured to ignore requests for retransmission in their single-minded purpose to starve R1 of resources, and so fails comply with TCP congestion control. The detection system interprets this to be an indication that C is either unwilling, or unable, to comply and block's C's traffic. It is a significant advantage of using the present invention that so far, only C's traffic to R1 is blocked; sender A's connection to the same receiver R1 is unaffected, as it has passed the test set by the detection system. This can be contrasted with the cruder methodology of the prior art, wherein all connections to R1 by sender hosts within a domain identified to be the source of flooding traffic, would have been dropped by the ISP as a response of an accusation of originating DoS attack traffic.

To illustrate the accuracy and specificity of the results attainable by using the present invention, sender D comprises a user D and a bot D. The traffic generated and sent by the user D is genuine and passes the test or challenged posed by the detection system. Traffic from bot D however, fails the test by not retransmitting packets which are allegedly missing and drop its transmission rate. Thus bot D is deemed to be a malicious sender and its traffic blocked. Meanwhile user D continues innocently and legitimately sending messages to R1, even though he is using the same one machine D from which flooding traffic is transmitted. Thus malicious (or faulty) traffic (rather than a malicious or faulty sender) can be identified and blocked, as such traffic could originate from a machine such as sender D which is not in itself malicious. However it is possible to identify the malicious sender if this is defined to be bot D, so that the system can be instructed to block all traffic originating from the identified malicious sender bot D addressed to the victim.

Thus, only those packets which have been generated by an application or bots configured to deliberately fail to comply with TCP protocols and congestion control mechanisms are caught by the method and apparatus of the invention - the only exception is traffic suffering from abnormal network conditions which prevent the sender from providing a conventional TCP response. Significantly, this method will also work to identify and block malicious senders with fake or spoof identities. This is because the NACK packet or failure to ACK will be sent to the party whose identity is (mis)identified - the senders with fake identities will not receive the challenging messages so he will not be able to respond to them.

The invention can also be used to identify spoof attackers and their traffic where attacking packets are sent each having a different IP addresses. In this case, the system of the invention could include a filter or a pattern matcher to identify and catch such packets by monitoring e.g. the packet header.

The present invention is simple to implement and deploy as it requires no significant change to the end clients or core network infrastructure. No new packets dedicated to the task of testing or challenging are required; currently-existing messages, methods and apparatus can be used for different purpose to different and useful effect. In particular, changes to the architecture of the router or switch behaviour are not needed. Any changes that do need to be made can be effected by off-the-shelf products.

In the examples discussed above, all traffic concerned is transmitted using the TCP protocol. The skilled person would appreciate that the invention is as applicable to any protocol using congestion control messages to control traffic rates, in situations where the attack comprises sending a large number of messages to the intended victim. Indeed, the method and apparatus of the present invention would work on any protocol that use messages that can be used to delay the sender traffic or lower his sending rate to minimum. The equivalent of NACK packets, being a congestion control message (with the associated detection of conventional protocol response or the lack thereof) can be used to test the integrity of the sender host.

The skilled person would recognise that a number of variations and alternatives based on the invention are possible to the devices, apparatus, methods, manufacturing methods and materials used. It is possible also to envisage other purposes, aims and environments to which these devices, methods and the like, may be applied. Accordingly, this invention is not limited to the particular set up and applications described herein. In particular, the two embodiments described above are only examples of ways in which malicious or otherwise abnormal behaviour and traffic can be identified according to the invention, i.e. failure to respond according to TCP rules and protocol. For instance, the behaviour of a sender and the traffic patterns in a SYN flood attack could itself arouse suspicion because of how the sender ignores the receiver's grant of the sender's connection request.

## Claims

1. A method of identifying an abnormal network condition, including the steps of
- monitoring a communications link for a high traffic volume,
- identifying a sender responsible for the high traffic volume level, and
- invoking a conventional TCP response from the sender
wherein a failure by the sender to provide a conventional TCP response is taken as an indication of an abnormal network condition.

2. A method according to claim 1 wherein the abnormal network condition is indicated by the high traffic volume being transmitted at a high transmission rate.

3. A method according to claim 1 or claim 2 wherein the abnormal network condition is indicative of a denial of service attack by the sender.

4. A method according to claim 1 or claim 2 wherein the abnormal network condition is indicative of a fault involving the sender.

5. A method according to any preceding claim further including the step of blocking traffic sent by the sender.

6. A method according to any preceding claim wherein the high traffic volume is generated by a plurality of senders.

7. A method according to any preceding claim wherein at least one malicious sender is an automated entity.

8. A method according to claim 7 wherein the automated entity is a bot or a zombie.

9. A method according to any preceding claim wherein the conventional TCP response from the sender comprises re-transmission of traffic, and wherein the failure to respond comprises a failure to re-transmit traffic and comply with the TCP congestion control by dropping the transmitted traffic rate.

10. A method according to claim 9 wherein the failure to re-transmit traffic is accompanied by continued sending of traffic by the sender and drop the TCP window size to lower his traffic rate.

11. A method according to any preceding claim wherein the invoking step comprises a request for congestion control.

12. A method according to any preceding claim wherein the invoking step comprises sending a negative acknowledgement (NACK) to the sender.

13. A method according to any preceding claim wherein the invoking step comprises failing to acknowledge receipt of traffic sent by the sender.

14. A method according to claim 13 wherein the failure to acknowledge receipt comprises withholding or delaying delivery of traffic sent by the sender.

15. Apparatus according to claim 13 wherein the failure acknowledge receipt comprises withholding or delaying delivery of an acknowledgement of receipt to the sender.

16. A method according to any preceding claim wherein the monitoring step comprises detection of anomalies in traffic patterns.

17. A method according to any preceding claim wherein the monitoring step comprises detection of traffic having an attack characteristic.

18. A method according to claim 16 or claim 17 wherein the monitoring step comprises reference to historical data.

19. A method according to any preceding claim wherein the identifying and invoking steps are performed at a location proximate to the sender.

20. A method according to claim 19 wherein the identifying and invoking steps are performed in the domain of the sender.

21. Apparatus for identifying a high traffic volume over a communications link indicative of an abnormal network condition, including
- monitoring means for monitoring the communications link for a high traffic volume,
- identifying means for identifying a sender responsible for the high traffic volume level,
- invoking means for invoking a conventional TCP response from the sender, and
- detecting means to detect lack of a conventional TCP response from the sender.

22. Apparatus according to claim 2.1 wherein the abnormal network condition is indicative of a denial of service attack by the sender.

23. Apparatus according to claim 21 wherein the abnormal network condition is indicative of a fault involving the sender.

24. Apparatus according to any one of claims 21 to 23 further including means to block the traffic sent by the sender.

25. Apparatus according to any one of claims 21 to 24 wherein the high traffic volume is generated by a plurality of senders.

26. Apparatus according to any one of claims 21 to 25 wherein at least one malicious sender is an automated entity.

27. Apparatus according to claim 26 wherein the automated entity is a bot or a zombie.

28. Apparatus according to any one of claims 21 to 27 wherein the invoking means is configured to send a request for transmission of packets.

29. Apparatus according to claim wherein the invoking means is configured to send a negative acknowledgement (NACK) to the sender.

30. Apparatus according to any one of claims 21 to 29 wherein the invoking means is configured to fail to acknowledge receipt of traffic sent by the sender.

31. Apparatus according to claim 30 wherein the invoking means is configured to withhold or delay delivery of traffic sent by the sender.

32. Apparatus according to claim 30 wherein the invoking means is configured to withhold or delay delivery of an acknowledgement of receipt to the sender.

33. Apparatus according to any one of claim 21 to 32 wherein the monitoring means is configured to detect anomalies in traffic patterns.

34. Apparatus according to any one of claim 21 to 33 wherein the monitoring means is configured to detect traffic having an attack characteristic.

35. Apparatus according to any one of claim 21 to 34 further including a database containing historical data pertaining to anomalies in traffic patterns and/or attack characteristics, to which the monitoring means is configured to make reference.

36. Apparatus according to any one of claims 21 to 35 wherein identifying means, invoking means, and detection means are located proximate to the sender.

37. A method according to claim 36 wherein the identifying means, invoking means, and detection means are located in the domain of the sender.

38. An installation comprising a telecommunications network, further including apparatus according to any one of claims 21 to 36.

39. A method of operating apparatus according to any one of claims 21 to 36.
